(19) Europäisches Patentamt / European Patent Office / Office européen des brevets

(11) **EP 2 057 207 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(21) Anmeldenummer: **07801623.5**

(22) Anmeldetag: **13.08.2007**

(51) Int Cl.:
***C08J 3/00*** *(2006.01)*

(86) Internationale Anmeldenummer:
**PCT/EP2007/007129**

(87) Internationale Veröffentlichungsnummer:
**WO 2008/025446 (06.03.2008 Gazette 2008/10)**

(54) **VERFAHREN ZUM COMPOUNDIEREN VON POLYMEREN**

METHOD OF COMPOUNDING POLYMERS

PROCÉDÉ DE COMPOUNDAGE DE POLYMÈRES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **26.08.2006 DE 102006040058**
**23.06.2007 DE 102007029010**

(43) Veröffentlichungstag der Anmeldung:
**13.05.2009 Patentblatt 2009/20**

(73) Patentinhaber: **Bayer MaterialScience AG**
**51368 Leverkusen (DE)**

(72) Erfinder:
• **SCHWEMLER, Christoph**
 **42799 Leichlingen (DE)**
• **LÜDEKE, Martin**
 **47800 Krefeld (DE)**
• **KORDS, Christian**
 **47829 Krefeld (DE)**
• **RUDOLF, Reiner**
 **51373 Leverkusen (DE)**

(56) Entgegenhaltungen:
EP-A- 0 768 157     WO-A-00/58072
WO-A-2005/054343

**Beschreibung**

Die Erfindung betrifft ein Verfahren zum schonenden Compoundieren von Polymeren und Polymerblends auf einem Schneckenextruder, wobei das Endprodukt einen besonders niedrigen Gehalt an Restlösungsmitteln und gleichzeitig einen niedrigen Gehalt an Monomeren oder Oligomeren aufweist.

Als Compoundieren bezeichnet man in der Polymeraufbereitung die Herstellung der fertigen Kunststoff-Formmasse, dem Compound, aus den Kunststoffrohstoffen unter Zugabe von Füll- und Verstärkungsstoffen, Weichmachern, Haftvermittlern, Gleitmitteln, Stabilisatoren etc.. Die Compoundierung erfolgt überwiegend in Extrudern und umfasst die Verfahrensoperationen Fördern, Aufschmelzen, Dispergieren, Mischen, Entgasen und Druckaufbau.

In neuerer Zeit wird in Kunststoffmischungen ein möglichst niedriger Gehalt an flüchtigen Komponenten gefordert. Daher kommt der Entgasung beim Compoundieren von Kunststoffrohstoffen eine steigende Bedeutung zu. Typischerweise liegt der Anteil der zu entgasenden flüchtigen Komponenten in den Kunststoffrohstoffen bei etwa 500 bis 2000 ppm und der Restgehalt im fertigen Compound bei kleiner 400 ppm.

In temperatursensiblen Polymeren bzw. Polymerblends können sich während des Compoundierprozesses neben den zu entgasenden Restmonomeren und -lösemitteln, welche bereits in den Rohstoffen enthalten sind, außerdem Monomere durch Rückspaltung bilden, beispielsweise bei kautschukmodifizierten Polycarbonat-Blends sind dies 1,3-Butadien und Acrylnitril. Die Rückspaltungskinetik ist stark temperaturabhängig, d. h. mit steigender Temperatur nimmt die Rückspaltung überproportional zu. Die Schwierigkeit bei der Compoundierung liegt darin, dass für eine effektive Entgasung der flüchtigen Komponenten neben einem niedrigen Druck eine hohe Temperatur erforderlich ist, bei einer hohen Temperatur gleichzeitig aber die Rückspaltung stark zunimmt. Zusätzlich kommt erschwerend hinzu, dass bei einer Reduzierung des Energieeintrags zur Absenkung der Temperatur und Vermeidung der Rückspaltung Probleme beim Aufschmelzen und der Durchmischung der Compound-Komponenten auftreten können, was sich negativ auf die Produktqualität (d.h. die mechanischen Eigenschaften und die Zusammensetzung) auswirkt. Dies gilt insbesondere bei hohen Durchsätzen, also kurzen Verweilzeiten, welche für einen wirtschaftlichen Compoundierprozess erforderlich sind. Bei höherem Durchsatz ist mit der bisherigen Technik eine gute Entgasung der flüchtigen Komponenten nur dann wirtschaftlich erreichbar, wenn gleichzeitig ein Anstieg der rückspaltenden Komponenten in Kauf genommen wird.

Die Verwendung von Schleppmitteln in Extrudern ist zwar bekannt, allerdings nur von der Entgasung von Polymerlösungen mit Eintritts-Lösemittelgehalten größer 1 %. Dabei erfolgt allerdings keine gleichzeitige Aufschmelzung fester Komponenten, da die Polymerlösung flüssig dosiert wird ohne zusätzliche Dispergierung von Blendkomponenten und Additiven. Als Beispiel sei hier DE 199 14 143 A1 genannt. Das Problem der Rückspaltung von Monomeren (oder Oligomeren) stellt sich hierbei jedoch nicht. Aus der EP 0 768 157 A1 ist noch ein Verfahren zur Trocknung von Polymerpulvern bekannt, bei dem unter Aufschmelzung des Polymeren und ggf. unter Verwendung eines Schleppmittels flüchtige Bestandteile eines Gehaltes von mindestens 1 Gew.-% entfernt werden. Diese Technik ist auf großvolumige Apparate begrenzt und befasst sich mit der Trocknung einzelner hochlösungsmittelhaltiger Polymerer. Ein Einsatz von Schleppmitteln bei der Compoundierung von Polymeren mit Extrudern, insbesondere von Polycarbonat-Blends, ist nicht bekannt.

Der Erfindung liegt die Aufgabe zu Grunde, ein Verfahren zur wirtschaftlichen Herstellung von temperatursensiblen Polymercompounds bereitzustellen mit einem gleichzeitig sehr geringen Restgehalt an flüchtigen und an rückspaltenden Komponenten, insbesondere zur Herstellung von kautschukmodifizierten Polycarbonatblends.

Die Aufgabe wird erfindungsgemäß dadurch gelöst, dass bei der Compoundierung im Extruder die Entgasung durch Einarbeitung eines Schleppmittels, insbesondere Stickstoff, verbessert wird. Der Schneckenbesatz zur Einarbeitung des Schleppmittels kann insbesondere so ausgeführt werden, dass trotz der im Vergleich zu herkömmlichen Schneckenbesätzen zusätzlich erforderlichen Mischzonen für das Schleppmittel, welche einen zusätzlichen Energieeintrag bewirken, nur eine geringe Erhöhung der Schmelztemperatur resultiert und somit die Rückspaltung nicht höher ist als bei konventionellen Compoundierprozessen.

Gegenstand der Erfindung ist ein Verfahren zum Compoundieren von mindestens zwei Polymeren mit einem Gesamt-Ausgangsrestgehalt an flüchtigen Verbindungen, bezogen auf die Zusammensetzung des Endproduktes, von < 1 Gew.-%, bevorzugt höchstens 0,1 Gew.-%, wobei mindestens ein Polymer unter thermischer Belastung Monomere oder Oligomere rückspaltet, unter Verwendung eines Schneckenwellenextruders, in dem die Polymerkomponenten gemischt, aufgeschmolzen und von flüchtigen Komponenten befreit werden, **dadurch gekennzeichnet, dass**

(i) der Extruder mindestens eine Aufschmelzzone, mindestens zwei, bevorzugt zwei bis vier, besonders bevorzugt zwei Entgasungszonen und mindestens eine, bevorzugt ein bis zwei, besonders bevorzugt zwei Mischzonen für das Schleppmittel aufweist und

(ii) die Entgasung unter Einsatz eines inerten Schleppmittels erfolgt, das in die Polymerschmelze eingeleitet wird und zusammen mit den flüchtigen Verbindungen aus dem Extruder entfernt wird.

Vorzugsweise weist der Extruder weiterhin eine Austragszone auf.

In einer bevorzugten Ausführungsform wird hierbei das Schleppmittel zusammen mit den flüchtigen Verbindungen durch Anlegen eines reduzierten Drucks $p_{abs}$ von weniger als 500 mbar, besonders bevorzugt von weniger als 100 mbar aus dem Extruder entfernt.

Bevorzugt wird als Schleppmittel Stickstoff, Edelgas oder Kohlendioxid, besonders bevorzugt Stickstoff, verwendet.

Unter "thermischer Belastung mindestens eines Polymeren" wird die Temperatur verstanden, bei der die Polymerkomponenten üblicherweise in der Schmelze verarbeitet werden. Diese Temperatur ist individuell auf das Polymer bzw. der Polymermischung abgestimmt und dem Fachmann bekannt. In der Regel sind dies Temperaturen in einem Bereich bis zu 400 °C. Im Falle einer Kombination von Acrylnitril-Butadien-Styrol-Pfropfcopolymer (ABS) und Polycarbonat wird unter thermischer Belastung eine Temperatur von 240 °C bis 310 °C, vorzugsweise von 270 bis 300 °C verstanden.

In einer bevorzugten Ausführungsform des erfindungsgemäßen Verfahrens werden als Polymere thermoplastische Polymere verwendet, besonders bevorzugt mindestens ein Polymer ausgewählt aus einer ersten Gruppe (im folgenden als "rückspaltende Polymere" bezeichnet) bestehend aus Polystyrol, Polystyrolco- bzw. -pfropfcopolymere, Polyacrylate, Polyalkylen und Polyamid und mindestens ein Polymer ausgewählt aus einer zweiten Gruppe (im folgenden als "nicht-rückspaltendes Polymere" bezeichnet) bestehend aus Polycarbonat, Polyestercarbonat und Polyalkylenterephthalat; insbesondere bevorzugt wird eine Kombination von Acrylnitril-Butadien-Styrol-Pfropfcopolymer (ABS) und Polycarbonat verwendet.

In einer weiteren Ausführungsform des erfindungsgemäßen Verfahrens werden mindestens zwei Polymere ausgewählt aus der Gruppe der rückspaltenden Polymere bestehend aus Polystyrol, Polystyrolco- bzw. -pfropfcopolymere, Polyacrylate und Polyalkylen verwendet; insbesondere bevorzugt wird eine Kombination von Acrylnitril-Butadien-Styrol-Pfropfcopolymer und Polyamid verwendet.

In beiden genannten Ausführungsformen werden bevorzugt rückspaltende Polymere ausgewählt aus der Gruppe bestehend aus Acrylnitril-Butadien-Styrol-Pfropfcopolymere (ABS), Polymethylmethacrylat und Polypropylen eingesetzt.

Das Mischungsverhältnis zweier Polymerkomponenten in einem bevorzugten Verfahren beträgt zwischen dem Monomere rückspaltenden Polymer und dem anderen, nicht rückspaltenden Polymer von 1 zu 10 bis 2 zu 1.

Bevorzugt ist auch ein Verfahren, das dadurch gekennzeichnet ist, dass als Extruder ein Zwei- oder Mehrwellenschneckenextruder, insbesondere eine Zweiwellenschneckenextruder, verwendet wird. Besonders bevorzugt ist der Schneckenextruder ein Zweiwellenschneckenextruder mit gleichsinniger Rotation der Wellen.

Mit einem Compoundierprozess mit herkömmlicher Technik ist beispielsweise für ein Polycarbonat/ABS-Blend mit ca. 50 % Polycarbonat-Anteil eine Entgasungseffizienz von lediglich kleiner 58 % erreichbar, ohne dass der Restgehalt an rückspaltendem 1,3-Butadienden jeweils den maximal gewünschten Wert überschreitet. Mit dem erfindungsgemäßen Verfahren lässt sich überraschenderweise für das gleiche Polymerblend bei gleichem Durchsatz eine Entgasungseffizienz von 68 % erreichen bei sogar noch niedrigerer Rückspaltung (vgl. Tabellen 2 und 3). Würde man mit der herkömmlichen Technik eine Entgasungseffizienz von 68 % erzielen wollen, so stiege der Restgehalt an rückspaltendem 1,3-Butadien um ca. 300 %.

Der besonders bevorzugt einzusetzende Extruder besitzt ein Längen/Durchmesser-Verhältnis der Schneckenwelle von 32 bis 44. Beste Ergebnisse wurden mit einem Längen/Durchmesser-Verhältnis von 36 erzielt.

Nach einer besonders bevorzugten Ausgestaltung besitzt der Extruder mindestens eine Aufschmelzzone, ein bis zwei Entgasungszonen, ein bis zwei Mischzonen für das Schleppmittel sowie eine Austragszone.

Das beste Ergebnis wurde entsprechend einem besonders bevorzugten Verfahren mit einer Schleppmittelmenge von 0,1 % bis 0,5 % bezogen auf den Gesamtdurchsatz an Ausgangsstoffen erzielt.

Gemäß einer weiteren bevorzugten Ausgestaltung des Verfahren sind die Mischzonen für das Schleppmittel so ausgeführt, das sie mit Schmelze gefüllt sind.

Sehr gute Ergebnisse wurden auch erzielt gemäß einem weiteren bevorzugten Verfahren bei Schleppmittelzugabe in schmelzegefüllte Schneckenabschnitte direkt in die Mischzone oder unmittelbar vor der Mischzone der Schnekke.

Für das Einmischen des Schleppmittels werden Schneckenelemente bevorzugt, die eine häufige Umlagerung der Schmelzeströme und eine breite Verweilzeitverteilung bewirken. Sehr gute Ergebnisse wurden mit Zahnmischelementen erzielt. Außerdem können zum Einmischen des Schleppmittels beispielsweise Schneckenmischelemente, Knetblöcke, Exzenterscheiben, Rückförderelemente etc. verwendet werden.

Gegenstand der Erfindung ist auch die Verwendung des erfindungsgemäßen Verfahrens zur Herstellung einer Polymermischung mit einem Summen-Gehalt aller flüchtigen Bestandteile der Polymerkomponenten (insbesondere 1,3-Butadien, Acrylnitril, Styrol, 4-Vinyl-1-cyclohexen, Ethylbenzol, Chlorbenzol; Bestimmung mittels Headspace Gaschromatographie) von kleiner als 1 Gew.-%, bevorzugt kleiner als 0,1 Gew.-% besonders bevorzugt kleiner als 0,05 Gew.-%.

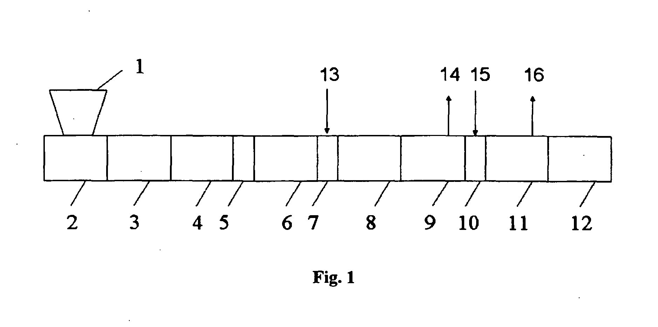

Die Erfindung wird nachstehend anhand einer ein Ausführungsbeispiel darstellenden Zeichnung näher erläutert. Die Figur 1 zeigt eine schematische Längsschnittdarstellung eines Doppelschneckenextruders zur Nutzung des erfindungsgemäßen Verfahrens.

## Beispiele

Der Doppelschneckenextruder weist ein aus 11 Teilen bestehendes Gehäuse auf, in welchem 2 gleichsinnig drehende, miteinander kämmende Wellen (nicht gezeigt) angeordnet sind. Die zu compoundierenden Komponenten werden dem Extruder über die im Gehäuseteil 2 ausgebildete Einzugsöffnung 1 zugeführt. Die Gehäuseteile 9 und 11 enthalten jeweils eine Entgasungsöffnung 14, 16, welche an eine Absaugvorrichtung (nicht gezeigt) angeschlossen ist. Die Gehäuseteile 7 und 10 sind mit jeweils einem Anschluss 13, 15 versehen, über den das Schleppmittel Stickstoff zudosiert wird.

Das letzte Gehäuseteil 12 bildet eine Austragszone, an deren Ende das compoundierte und entgaste Produkt aus dem Extruder austritt.

Im Bereich der Gehäuseteile 4 bis 6 befindet sich eine Aufschmelzzone mit Knetelementen der Schneckenwelle.

Im Bereich der Gehäuseteile 7 und 10 sind zwischen den Förderelementen der Schneckenwelle Mischelemente angeordnet.

Im Bereich der Gehäuseteile 9 und 11 unterhalb der Entgasungsöffnungen 14, 16 ist die Gangsteigung jeweils größer als der Schneckenaußendurchmesser.

Die Gehäuseteile 3 und 8 beinhalten jeweils Förderzonen für das Granulat (3) bzw. für die Schmelze (8).

Der Restgehalt an flüchtigen Bestandteilen (1,3-Butadien, Acrylnitril, Styrol, 4-Vinyl-1-cyclohexen, Ethylbenzol, Chlorbenzol) wurde mittels Headspace Gaschromatographie ermittelt. Hierzu wird eine Probe des Materials in γ-Butyrolacton gelöst und mittels Headspace Gaschromatographie analysiert. Als Detektor wurde ein Flammenionisationsdetektor eingesetzt. Die quantitative Auswertung erfolgt mit Hilfe eines internen Standards. Der Arbeitsbereich der Methode hängt von der jeweiligen Substanz ab und liegt im Bereich von 0,1 - 500 mg/kg. Die Nachweisgrenze für 1,3-Butadien betrug 0,1 mg/kg, für die weiteren Substanzen betrug die Nachweisgrenze 5 mg/kg.

Die Anzahl unaufgeschmolzener Partikel in 50 Granulaten wurde bestimmt, indem 50 GranulatKörner (Dimension ca. 3 mm x 3 mm x 3 mm) mit Hilfe eines Mikroskops auf unaufgeschmolzene Partikel der Ausgangsstoffe untersucht wurden und die gefundenen Partikel ausgezählt wurden.

## Beispiel 1 (Vergleich)

Die Compoundierung von Polycarbonat (PC) und Acrylnitril-Butadien-Styrol-Pfropfcopolymer (ABS) (ca. 50 Gew.-% PC-Gehalt; PC-Typ: Makrolon 2600, Hersteller Bayer MaterialScience AG; ABS, Typ: Emulsions-ABS mit ca. 1000 ppm Restmonomeren) mit einer Eingangskonzentration an flüchtigen Verbindungen von 660 ppm erfolgt zunächst auf einem Zweiwellenschneckenextruder vom Typ ZSK 120 (Coperion Werner & Pfleiderer) mit einem gemäß dem Stand der Technik üblichen Verfahren, d. h. ohne Schleppmittelzugabe.

Alle Polymerkomponenten und Additive (Entformungsmittel, Thermostabilisator, Antioxidantien) wurden in den Einzugstrichter im ersten Gehäuseteil dosiert. Im vorletzten Gehäuseteil wurde die Schmelze entgast. Die Prozessparameter und Restgehalte sind in der folgenden Tabelle dargestellt. Bei allen Beispielen lag die Temperatur der Schmelze bei Austritt aus dem Extruder bei ca. 300 °C.

Tabelle 1

| Durchsatz | Drehzahl | Druck | Restgehalt | | Entgasungseffizienz |
|---|---|---|---|---|---|
| | | | Summe aller flüchtigen Bestandteile | 1,3-Butadien | |
| kg/h | 1/min | mbar | ppm | ppm | % |
| 1700 | 250 | 110 | 343 | 0,4 | 48 |

Bei oben genanntem Durchsatz wurde lediglich eine Entgasungseffizienz von 48 % erreicht.

Die Entgasungseffizienz wurde nach folgender Formel berechnet:

$$\frac{\sum \text{Restgehalte}_{Eingang} - \sum \text{Restgehalte}_{Ausgang}}{\sum \text{Restgehalte}_{Eingang}} \cdot 100\,\%$$

**Beispiel 2 (Vergleich)**

Die Compoundierung von PC/ABS (ca. 50 % PC Gehalt) erfolgte wie in Beispiel 1 mit einer Eingangskonzentration an flüchtigen Bestandteilen von 660 ppm auf einem ZSK 58Mc (Coperion Werner & Pfleiderer) mit dem derzeit üblichen Verfahren.

Alle Komponenten wurden in den Einzugstrichter im ersten Gehäuse dosiert. Im vorletzten Gehäuse wurde die Schmelze entgast. Es wurden zwei Versuchsreihen durchgeführt:

    1. Versuchsreihe: Variation der Drehzahl

    2. Versuchsreihe. Variation des Entgasungsdrucks

Die Prozessparameter und Restgehalte sind in der folgenden Tabelle dargestellt.

Tabelle 2

| Durchsatz | Drehzahl | Druck | Restgehalt | | Entgasungseffizienz | spezif. Energieeintrag |
|---|---|---|---|---|---|---|
| | | | Summe aller flüchtigen Bestandteile | 1,3-Butadien | | |
| kg/h | 1/min | mbar | ppm | ppm | % | kWh/kg |
| 1. Versuchsreihe | | | | | | |
| 1000 | 550 | 50 | 376,2 | 0,2 | 43 | 0.129 |
| 1000 | 720 | 50 | 315,3 | 0,3 | 53 | 0.139 |
| 1000 | 920 | 50 | 273,15 | 0,7 | 59 | 0.149 |
| 1000 | 1000 | 50 | 278,8 | 0,8 | 58 | 0.151 |
| 1160 | 1200 | 50 | 259,1 | 1,1 | 61 | 0.154 |
| 2. Versuchsreihe | | | | | | |
| 1000 | 720 | 100 | 305,2 | 0,2 | 54 | 0.135 |
| 1000 | 720 | 50 | 298,3 | 0,3 | 55 | 0.134 |
| 1000 | 720 | 9 | 307,2 | 0,2 | 54 | 0.138 |
| 800 | 540 | 100 | 350,2 | 0,2 | 47 | 0.129 |
| 800 | 540 | 45 | 316,2 | 0,2 | 52 | 0.128 |
| 800 | 540 | 8 | 293,2 | 0,2 | 56 | 0.127 |

Ergebnisse:

    1. Versuchsreihe: Mit steigender Drehzahl, was gleichbedeutend ist mit steigendem Energieeintrag, sank die Summe aller Restgehalte der flüchtigen Verbindungen, allerdings stieg der Gehalt an rückgespaltenem 1,3-Butadien gleichzeitig über 1 ppm. Die maximale Entgasungseffizienz, bei der noch ein Gehalt an 1,3-Butadien von unter 1 ppm erreicht wurde, betrug 59 %.

    2. Versuchsreihe: Mit einer Verringerung des Drucks konnte keine Steigerung der Entgasungseffizienz im Vergleich zur 1. Versuchsreihe erzielt werden.

Im Endprodukt der 1. und 2. Versuchsreihe befanden sich zudem zwischen 18 und 44 große, unaufgeschmolzene Polymerpartikel in 50 Granulaten.

**Beispiel 3 (Vergleich mit 2 Entgasungszonen)**

Die Compoundierung von PC/ABS (ca. 50 % PC Gehalt; Komponenten wie in Beispiel 1) mit einer Eingangskonzentration an flüchtigen Verbindungen von 990 ppm erfolgte auf einem Zweiwellenschneckenextruder Typ ZSK 32Mc (Coperion Werner & Pfleiderer) mit Vakuumentgasung an zwei Stellen nach der Aufschmelzzone.

Alle Polymerkomponenten und Additive (Entformungsmittel, Thermostabilisator, Antioxidantien) wurden in den Einzugstrichter im ersten Gehäuse dosiert. Die Prozessparameter und Restgehalte sind in der folgenden Tabelle 3 dargestellt.

Tabelle 3

| Durchsatz | Drehzahl | Druck 1 | Druck 2 | Restgehalt | | Entgasungs-effizienz | spezif. Energie-eintrag | Anzahl unaufge-schmolzener Partikel in 50 Granulaten |
|---|---|---|---|---|---|---|---|---|
| | | | | Summe aller flüchtigen Bestandteile | 1,3-Butadien | | | |
| kg/h | 1/min | mbar | mbar | ppm | ppm | % | kWh/kg | |
| 168,5 | 600 | 54 | 57 | 428,6 | 0,6 | 56,7 | 0,135 | 4 |

Ergebnis:

Mit zwei Entgasungszonen konnte keine Steigerung der Entgasungseffizienz erreicht werden.

**Beispiel 4 (Vergleich mit 1 Entgasungszone und 1 Schleppgaszuleitung)**

Die Compoundierung von PC/ABS (ca. 50 % PC Gehalt; Komponenten wie in Beispiel 1) mit einer Eingangskonzentration an flüchtigen Verbindungen von 990 ppm erfolgte auf einem Zweiwellenschneckenextruder Typ ZSK 32Mc (Coperion Werner & Pfleiderer) mit einer Vakuumentgasung und einer Schleppgaszuleitung, wobei die Schleppgaszuleitung in die Polymerschmelze vor der Entgasung erfolgte.
Alle Polymerkomponenten und Additive (Entformungsmittel, Thermostabilisator, Antioxidantien) wurden in den Einzugstrichter im ersten Gehäuse dosiert. Die Prozessparameter und Restgehalte sind in der folgenden Tabelle 4 dargestellt.

Tabelle 4

| Durchsatz | Drehzahl | Stickstoff | Druck | Restgehalt | | Entgasungseffizienz | spezif. Energie-eintrag | Anzahl unaufgeschmolzener Partikel in 50 Granulaten |
|---|---|---|---|---|---|---|---|---|
| | | | | Summe aller flüchtigen Bestandteile | 1,3-Butadien | | | |
| kg/h | 1/min | % | mbar | ppm | ppm | % | kWh/kg | |
| 168,5 | 600 | 0,5 | 57 | 358.5 | 0,5 | 63,8 | 0,136 | 4 |
| 168,5 | 600 | 1 | 53 | 352.5 | 0,5 | 64,4 | 0,136 | 11 |
| 168,5 | 600 | 1,3 | 53 | 371.5 | 0,5 | 62,5 | 0,135 | 4 |

Ergebnis:

Die Entgasungseffizienz konnte verbessert werden im Vergleich zu Beispiel 1 bis 3 bei gleichzeitig niedrigem 1,3-Butadien Restgehalt. Allerdings traten noch 4 - 11 unaufgeschmolzene Partikel in 50 Granulaten auf.

### Beispiel 5 (erfindungssemäß; mit 2 Entgasungszonen und 1 Schleppgaszuleitung)

Die Compoundierung von PC/ABS (ca. 50 % PC Gehalt; Komponenten wie in Beispiel 1) mit einer Eingangskonzentration an flüchtigen Verbindungen von 990 ppm erfolgte auf einem Zweiwellenschneckenextruder Typ ZSK 32Mc (Coperion Werner & Pfleiderer) mit zweimal Vakuumentgasung und einer Schleppgaszuleitung in die Polymerschmelze, wobei die Schleppgaszuleitung zwischen den beiden Entgasungzonen erfolgte.

Alle Polymerkomponenten und Additive (Entformungsmittel, Thermostabilisator, Antioxidantien) wurden in den Einzugstrichter im ersten Gehäuse dosiert. Die Prozessparameter und Restgehalte sind in der folgenden Tabelle 5 dargestellt.

Tabelle 5

| Durch-satz | Dreh-zahl | Stick-stoff | Druck 1 | Druck 2 | Restgehalt | | Entgasungseffizienz | spezif. Energie-eintrag | Anzahl unaufgeschmolzener Partikel in 50 Granulaten |
|---|---|---|---|---|---|---|---|---|---|
| | | | | | Summe aller flüchtigen Bestandteile | 1,3-Butadien | | | |
| kg/h | 1/min | % | mbar | mbar | ppm | ppm | % | kWh/kg | |
| 168,5 | 600 | 0,5 | 53 | 54 | 291,5 | 0,5 | 70,5 | 0,133 | 8 |
| 168,5 | 600 | 1 | 50 | 51 | 307 | 0,5 | 69 | 0,136 | 4 |
| 168,5 | 600 | 1,3 | 52 | 53 | 310 | 0,5 | 68,7 | 0,135 | 8 |

Ergebnis:

Die Entgasungseffzienz konnte verbessert werden im Vergleich zu Beispiel 1 bis 4 bei gleichzeitig niedrigem 1,3-Butadien Restgehalt. Es traten nur noch 4 - 8 unaufgeschmolzene Partikel in 50 Granulaten auf.

### Beispiel 6 (erfindungsgemäß; mit 2 Entgasungszonen und 2 Schleppgaszuleitungen)

Die Compoundierung von PC/ABS (ca. 50 % PC Gehalt; Komponenten wie in Beispiel 1) mit einer Eingangskonzentration an flüchtigen Verbindungen von 671 ppm erfolgte auf einem modifizierten Zweiwellenschneckenextruder Typ ZSK 32Mc (Coperion Werner & Pfleiderer) mit der erfindungsgemäßen Schleppgaszuleitung (siehe Fig. 1).

Alle Polymerkomponenten und Additive (Entformungsmittel, Thermostabilisator, Antioxidantien) wurden in den Einzugstrichter im ersten Gehäuse dosiert. An zwei Stellen wurde jeweils 0,5 % Stickstoff, bezogen auf 168,5 kg/h der Ausgangsstoffe in die Schmelze dosiert. Die Prozessparameter und Restgehalte sind in der nachfolgenden Tabelle 6 dargestellt.

Mit dem erfindungsgemäßen Verfahren gemäß Beispiel 6 wurde ein Compound mit sehr niedrigem Restgehalt flüchtiger Verbindungen und guten mechanischen und rheologischen Eigenschaften hergestellt. Die Entgasungseffzienz lag bei 68,2% bei gleichzeitig sehr niedrigem 1,3-Butadien Gehalt (0,6 ppm).

Bei dem Durchsatz von 168,5 kg/h (dies entspricht hochskaliert einem Durchsatz, der derzeit auf einem Doppelschneckenextruder mit gleicher Drehmomentdichte mit konventionellen Verfahren angewendet wird) wurde lediglich ein einziger unaufgeschmolzener Partikel in 50 Granulaten gefunden.

Tabelle 6

| Durchsatz | Drehzahl | Stickstoff 1 | Stickstoff 2 | Druck 1 | Druck 2 | Restgehalt | | Entgasungseffizienz | spezif. Energie-eintrag | Anzahl unaufgeschmolzener Partikel in 50 Granulaten |
|---|---|---|---|---|---|---|---|---|---|---|
| | | | | | | Summe aller flüchtigen Bestandteile | 1,3-Butadien | | | |
| kg/h | 1/min | % | % | mbar | mbar | ppm | ppm | % | kWh/kg | |
| 168,5 | 600 | 0,5 | 0,5 | 55 | 50 | 213,6 | 0,6 | 68,2 | 0,138 | 1 |

**Patentansprüche**

1. Verfahren zum Compoundieren von mindestens zwei Polymeren mit einem Gesamtrestgehalt an flüchtigen Verbindungen von < 1 Gew.-%, wobei mindestens ein Polymer unter thermischer Belastung Monomere oder Oligomere rückspaltet, unter Verwendung eines Schneckenwellenextruders, in dem die Polymerkomponenten gemischt, aufgeschmolzen und von flüchtigen Komponenten befreit werden, **dadurch gekennzeichnet, dass**

   (i) der Extruder mindestens eine Aufschmelzzone, mindestens zwei Entgasungszonen und mindestens eine Mischzonen für das Schleppmittel aufweist und
   (ii) die Entgasung unter Einsatz eines inerten Schleppmittels erfolgt, das in die Polymerschmelze eingeleitet wird und zusammen mit den flüchtigen Verbindungen aus dem Extruder entfernt wird.

2. Verfahren gemäß Anspruch 1, **dadurch gekennzeichnet, dass** das Schleppmittel zusammen mit den flüchtigen Verbindungen durch Anlegen eines reduzierten Drucks $p_{abs}$ von weniger als 500 mbar aus dem Extruder entfernt wird.

3. Verfahren nach einem der Ansprüche 1 oder 2, **dadurch gekennzeichnet, dass** als Polymere mindestens ein Polymer ausgewählt aus einer ersten Gruppe ("rückspaltende Polymere") bestehend aus Polystyrol, Polystyrolco- bzw. -pfropfcopolymere, Polyacrylate, Polyalkylen und Polyamid und mindestens ein Polymer ausgewählt aus einer zweiten Gruppe ("nicht-rückspaltendes Polymere") bestehend aus Polycarbonat, Polyestercarbonat und Polyalkylenterephthalat verwendet werden.

4. Verfahren gemäß Anspruch 3, **dadurch gekennzeichnet dass** als Polymere eine Kombination von Acrylnitril-Butadien-Styrol-Pfropfcopolymer und Polycarbonat verwendet werden.

5. Verfahren nach einem der Ansprüche 1 oder 2, **dadurch gekennzeichnet, dass** als Polymere mindestens zwei Polymere ausgewählt aus der Gruppe der rückspaltenden Polymere bestehend aus Polystyrol, Polystyrolco- bzw. -pfropfcopolymere, Polyacrylate, Polyalkylen und Polyamid verwendet werden.

6. Verfahren nach einem der Ansprüche 1 bis 4, **dadurch gekennzeichnet, dass** das Mischungsverhältnis zweier Polymerkomponenten zwischen dem Monomere rückspaltenden Polymer und dem anderen, nicht rückspaltenden Polymer von 1 zu 10 bis 2 zu 1 beträgt.

7. Verfahren nach einem der Ansprüche 1 bis 6, **dadurch gekennzeichnet, dass** die Schleppmittelzugabe und die Entfernung der flüchtigen Bestandteile in mehreren Stufen, insbesondere in zwei oder drei Stufen, besonders bevorzugt in zwei Stufen, erfolgt.

8. Verfahren nach einem der Ansprüche 1 bis 7, **dadurch gekennzeichnet, dass** als Extruder ein Zwei- oder Mehrwellenschneckenextruder verwendet wird.

9. Verfahren nach Anspruch 8, **dadurch gekennzeichnet, dass** der Schneckenextruder ein Zweiwellenschneckenextruder mit gleichsinniger Rotation der Wellen ist.

10. Verfahren nach einem der Ansprüche 1 bis 9, **dadurch gekennzeichnet, dass** der einzusetzende Extruder ein Längen- zu Durchmesser-Verhältnis der Schneckenwelle von 32 bis 44 aufweist.

11. Verfahren nach einem der Ansprüche 1 bis 10, **dadurch gekennzeichnet, dass** ein Extruder verwendet wird, der mindestens eine Aufschmelzzone, zwei Entgasungszonen, ein bis zwei Mischzonen für das Schleppmittel sowie eine Austragszone aufweist.

12. Verfahren nach einem der Ansprüche 1 bis 10, **dadurch gekennzeichnet, dass** ein Extruder verwendet wird, der mindestens eine Aufschmelzzone, zwei Entgasungszonen, zwei Mischzonen für das Schleppmittel sowie eine Austragszone aufweist.

13. Verfahren nach einem der Ansprüche 1 bis 11, **dadurch gekennzeichnet, dass** die Menge des Schleppmittels 0,1 bis 0,5 % bezogen auf den Gesamtdurchsatz an Ausgangsstoffen beträgt.

14. Verfahren nach einem der Ansprüche 1 bis 13, **dadurch gekennzeichnet, dass** die Zugabe des Schleppmittels in mit Schmelze gefüllte Abschnitte der Schnecken innerhalb der Mischzone oder unmittelbar vor der Mischzone der Schnecke erfolgt.

15. Verwendung des Verfahrens gemäß einem der Ansprüche 1 bis 14 zur Herstellung einer Polymermischung mit einem Summen-Gehalt aller flüchtigen Bestandteile der Polymerkomponenten kleiner als 1 Gew.-%.

**Claims**

1. Process for the compounding of at least two polymers with a total residual content of volatile compounds of < 1 wt. %, wherein at least one polymer disassociates monomers or oligomers on exposure to heat, using a screw shaft extruder in which the polymer components are mixed, melted and freed of volatile components, **characterised in that**

   (i) the extruder has at least one melting zone, at least two degassing zones and at least one mixing zone for the entraining agent and
   (ii) degassing takes place using an inert entraining agent which is introduced into the polymer melt and is removed from the extruder together with the volatile compounds.

2. Process according to claim 1, **characterised in that** the entraining agent is removed from the extruder together with the volatile compounds by applying a reduced pressure $p_{abs}$ of less than 500 mbar.

3. Process according to one of claims 1 or 2, **characterised in that** at least one polymer selected from a first group ("disassociation polymers") consisting of polystyrene, polystyrene copolymers or polystyrene graft copolymers, polyacrylates, polyalkylene and polyamide and at least one polymer selected from a second group ("non-disassociation polymers") consisting of polycarbonate, polyester carbonate and polyalkylene terephthalate, are used as polymers.

4. Process according to claim 3, **characterised in that** a combination of acrylonitrile-butadiene-styrene graft copolymers and polycarbonate are used as polymers.

5. Process according to one of claims 1 or 2, **characterised in that** at least two polymers selected from the group of disassociation polymers consisting of polystyrene, polystyrene copolymers or polystyrene graft copolymers, polyacrylates, polyalkylene and polyamide, are used as polymers.

6. Process according to one of claims 1 to 4, **characterised in that** the mixing ratio of two polymer components between the monomer disassociation polymer and the other, non-disassociation polymer is 1 to 10 to 2 to 1.

7. Process according to one of claims 1 to 6, **characterised in that** addition of entraining agent and removal of the volatile constituents takes place in several stages, in particular in two or three stages, particularly preferably in two stages.

8. Process according to one of claims 1 to 9, **characterised in that** a twin- or multi-shaft screw extruder is used as extruder.

9. Process according to claim 8, **characterised in that** the screw extruder is a twin-shaft screw extruder with co-rotation of the shafts.

10. Process according to one of claims 1 to 9, **characterised in that** the extruder to be used has a length to diameter ratio of the screw shaft of 32 to 44.

11. Process according to one of claims 1 to 10, **characterised in that** an extruder which has at least one melting zone, two degassing zones, one to two mixing zones for the entraining agent and a metering zone is used.

12. Process according to one of claims 1 to 10, **characterised in that** an extruder which has at least one melting zone, two degassing zones, two mixing zones for the entraining agent and a metering zone, is used.

13. Process according to one of claims 1 to 11, **characterised in that** the quantity of the entraining agent is 0.1 to 0.5% based on the total throughput of starting materials.

**14.** Process according to one of claims 1 to 13, **characterised in that** addition of the entraining agent into sections of the screws filled with melt takes place inside the mixing zone or directly before the mixing zone of the screw.

**15.** Use of the process according to one of claims 1 to 14 for the production of a polymer mixture with a total content of all volatile components of the polymer components of less than 1 wt.%.

**Revendications**

**1.** Procédé pour le compoundage d'au moins deux polymères avec une teneur totale résiduelle en constituants volatils < 1 % en poids, au moins un polymère se redissociant sous charge thermique en monomères ou oligomères, en utilisant une extrudeuse à arbre de vis sans fin, dans lequel les constituants polymères sont mélangés, fondus et libérés des constituants volatils, **caractérisé en ce que**

(i) l'extrudeuse présente au moins une zone de fusion, au moins deux zones de dégazage et au moins une zone de mélange pour l'agent d'entraînement et
(ii) le dégazage est réalisé en utilisant un agent d'entraînement inerte, lequel est introduit dans la masse en fusion polymère et est éliminé de l'extrudeuse avec les constituants volatils.

**2.** Procédé selon la revendication 1, **caractérisé en ce que** l'agent d'entraînement est éliminé de l'extrudeuse avec les constituants volatils par application d'une pression réduite $p_{abs}$ inférieure à 5 mbar.

**3.** Procédé selon l'une quelconque des revendications 1 ou 2, **caractérisé en ce que** l'on utilise comme polymères au moins un polymère choisi dans un premier groupe ("polymères se redissociant") constitué du polystyrène, de copolymères respectivement copolymères greffés de polystyrène, de polyacrylate, de polyalkylène et de polyamide et d'au moins un polymère choisi dans un second groupe ("polymères ne se redissociant pas") constitué de polycarbonate, de polyestercarbonate et de poly(alkylène téréphtalate).

**4.** Procédé selon la revendication 3, **caractérisé en ce que** l'on utilise comme polymères une combinaison de copolymère greffé d'acrylonitrile-butadiène-styrène et de polycarbonate.

**5.** Procédé selon l'une quelconque des revendications 1 ou 2, **caractérisé en ce que** l'on utilise comme polymères au moins deux polymères choisis dans le groupe des polymères se redissociant constitué de polystyrène, de copolymères respectivement de copolymères greffés de polystyrène, de polyacrylate, de polyalkylène et de polyamide.

**6.** Procédé selon l'une quelconque des revendications 1 à 4, **caractérisé en ce que** le rapport de mélange des deux constituants polymères entre le polymère se redissociant en monomères et l'autre polymère ne se redissociant pas est de 1 à 10 jusqu'à de 2 à 1.

**7.** Procédé selon l'une quelconque des revendications 1 à 6, **caractérisé en ce que** l'addition d'agent d'entraînement et l'élimination des constituants volatils est réalisée en plusieurs étapes, en particulier en 2 ou 3 étapes, encore mieux en 2 étapes.

**8.** Procédé selon l'une quelconque des revendications 1 à 7, **caractérisé en ce que** l'on utilise comme extrudeuse une extrudeuse à vis sans fin à deux ou plusieurs arbres.

**9.** Procédé selon la revendication 8, **caractérisé en ce que** l'extrudeuse à vis sans fin est une extrudeuse à vis sans fin à deux arbres avec une rotation des arbres dans le même sens.

**10.** Procédé selon l'une quelconque des revendications 1 à 9, **caractérisé en ce que** l'extrudeuse utilisée présente un rapport longueur à diamètre de l'arbre à vis sans fin de 32 à 44.

**11.** Procédé selon l'une quelconque des revendications 1 à 10, **caractérisé en ce que** l'on utilise une extrudeuse qui présente au moins une zone de fusion, deux zones de dégazage, une à deux zones de mélange pour l'agent d'entraînement ainsi qu'une zone d'évacuation.

**12.** Procédé selon l'une quelconque des revendications 1 à 10, **caractérisé en ce que** l'on utilise une extrudeuse qui présente au moins une zone de fusion, deux zones de dégazage, deux zones de mélange pour l'agent d'entraînement ainsi qu'une zone d'évacuation.

13. Procédé selon l'une quelconque des revendications 1 à 11, **caractérisé en ce que** la quantité de l'agent d'entraînement est de 0,1 à 0,5 % rapporté au débit total des matières de départ.

14. Procédé selon l'une quelconque des revendications 1 à 13, **caractérisé en ce que** l'addition de l'agent d'entraînement est réalisée dans des tronçons des vis sans fin remplis de la masse en fusion à l'intérieur de la zone de mélange et immédiatement avant la zone de mélange de la vis sans fin.

15. Utilisation du procédé selon l'une quelconque des revendications 1 à 14 pour la préparation d'un mélange polymère avec une teneur totale de tous les constituants volatils des constituants polymères inférieure à 1 % en poids.

Fig. 1

**IN DER BESCHREIBUNG AUFGEFÜHRTE DOKUMENTE**

**In der Beschreibung aufgeführte Patentdokumente**

- DE 19914143 A1
- EP 0768157 A1